# EUROPEAN PATENT SPECIFICATION

(11) **EP 1 504 672 B1**
(45) Date of publication and mention of the grant of the patent: **12.12.2007**
(21) Application number: 03425546.3
(22) Date of filing: 08.08.2003
(51) Int. Cl.: A23G 3/00, A21D 13/08

(54) **A process for producing a chocolate snack**
Herstellprozess für ein Schokoladenprodukt
Procédé pour produire des produits de chocolat

(43) Date of publication of application: 09.02.2005
(73) Proprietor: Barilla G. e R. Fratelli S.p.A., 43100 Parma (IT)
(72) Inventor: Buttini, Roberto, 43058 Sorbolo (Parma) (IT); Pedretti, Maurizio, 43036 Fidenza (Parma) (IT)
(74) Representative: Ferreccio, Rinaldo

(56) References cited:
- EP-A- 0 947 141
- WO-A-97/15198
- FR-A- 2 744 593
- US-A- 4 287 216

## Description

The present invention refers, in general, to the confectionery industry sector.

In particular the invention concerns a snack consisting of soft baked dough filled with chocolate and a process for its production.

It is known that one of the snacks favoured by children, and not only by children, is bread filled with chocolate slabs, also for the pleasant contrasting sensation felt at the palate by the opposing consistency of bread and chocolate.

Despite this, no industrially produced snacks that in some way bring to mind bread and chocolate are actually available on the market.

The reasons for this lack of availability can be found in the technical difficulties inherent in the industrial scale production of a similar snack and in its conservation at room temperature without the use of preservatives.

Indeed it is difficult to propose, unless by facing very high costs, the industrial scale production of a snack of the type "bread and chocolate" by means of inserting a preformed chocolate slab into a base of soft baked dough.

An apparatus for carrying out a similar process is described in patent EP 0 060 370.

From EP-0947141-A a composite confectionery product is known, which comprises two layers of a bakery product separated by layers of cream, with an interposed chocolate layer.

On the other hand the depositing of a layer of melted chocolate on a soft baked dough base, in such a way as to form "in situ" the chocolate slab, cannot even be envisaged because the rheological characteristics of melted chocolate rule this out: indeed melted chocolate, being too fluid, tends to overflow and furthermore tends to be absorbed by the baked dough and thus form too thin a layer.

Finally, there is a serious problem of microbiological instability in the final snack, due to the fact that the chocolate, having a decidedly lower moisture content than the baked dough base, tends to absorb water from it. The consequence of this is the tendency of mould to proliferate on the chocolate. To this is added the softening of the chocolate slab and the contemporary hardening of the baked dough base.

The problem underlying the present invention is therefore that of making available a snack of the bread and chocolate type, that can be kept at room temperature without the addition of preservatives and that remains essentially unaltered in its organoleptic characteristics throughout its the shelf-life, as well as that of furnishing a process for the production of such a snack.

Such a problem has been solved, according to the invention, by a process for the production of a snack comprising at least a first and a second layer of baked soft dough with an interposed layer of chocolate, that comprises the steps of:
- making available a first continuous layer of soft oven baked dough and depositing on this said first layer a continuous layer of a cream that acts as a barrier to the migration of moisture;
- depositing on said layer of cream a continuous layer of melted chocolate incorporating from 2.0 to 10% water;
- depositing on the said layer of chocolate a second continuous layer of soft oven baked dough;
- optionally repeating said steps for further layers of utilised soft baked dough;
- obtaining individual filled snacks from said superimposed layers through cutting operations.

Preferably, before depositing the second continuous layer of soft baked dough, a second layer of barrier-acting cream is deposited on the said chocolate layer

It is advantageous to incorporate 2.0 to 3.5% water into the melted chocolate and such incorporation is carried out by mixing the chocolate, that has already undergone tempering, with the necessary quantity of water. Preferably, the incorporation takes place at a temperature of about 25-30°C, advantageously at around 27-28°C.

According to a preferred embodiment of the process according to the present invention, the melted chocolate utilized is first pasteurised, before the tempering phase, to ensure its impeccability from the microbiological point of view.

Surprisingly, it has been verified that the addition of water to melted chocolate in the above mentioned proportions results in a product endowed with rheological properties similar to those of a cream at a temperature of around 25-30°C and therefore capable of being deposited in a continuous layer form on the underlying baked dough layer, without running or overflowing it. Furthermore it shows no tendency to be absorbed by the underlying baked dough, consequently it is possible to obtain an adequate and predetermined thickness.

Once brought to room temperature (around 20°C), such a layer takes on a consistency similar to that of a slab of chocolate, indeed even more vitreous and crisp.

In addition, as a result of the appreciable water content, it has a water activity (A_{w}) not very much lower than that of the soft baked dough and cream in contact with it. Consequently, water migration towards the chocolate is extremely limited, allowing long-term maintenance of the crisp consistency of the chocolate and integrity from the microbiological point of view.

When use is made of previously pasteurised chocolate, the risks of microbiological contamination of the snack according to the invention are totally excluded for conservation periods of up to six months.

The cream acting as a barrier toward the migration of moisture, previously subjected to pasteurisation too, can be selected from among those already known in the art of this field but advantageously it is a barrier cream of reduced lipid content (20-30%) and a total water content of around 20-25%.

The soft baked dough making up several layers of the snack according to the invention can be any whatever type of soft dough commonly used in industrial pastry making, like for example flaky pastry, sponge cake, leavened dough (with chemical or natural yeast) etc..

The present invention will be further described making reference to several examples supplied here in the following as illustrative and not limiting.

### EXAMPLE 1

### Preparation of the chocolate incorporating water

The starting chocolate was a plain chocolate, supplied in the melted state at a temperature of 52° ± 8°C. Such melted chocolate was put into an apparatus purposely built for the pasteurisation of liquids, brought to a temperature of 85°C and maintained at such temperature for 5 minutes, after which it was cooled to about 45°C. At this point the pasteurised chocolate underwent a tempering process to stabilise the emulsion of solid and fatty particles of cocoa, cooling down from 45°C to 28°C.

At the end of the tempering process, the melted chocolate was transferred to a planetary mixer, always keeping the temperature around about 28°C, and gradually adding 3 parts by weight of water per 100 parts by weight of chocolate, taking care to maintain a constant temperature of around 28°C. At the end of the water addition the chocolate, initially very runny and flowing, became of creamy consistency.

### EXAMPLE 2

### Preparation of a snack according to the invention

First of all an oven baked dough base was prepared starting with the following ingredients:

| | |
|---|---|
| Soft wheat flour | 50% |
| Margarine | 14% |
| Sugar | 13% |
| Water | 10% |
| Egg yolk | 10% |
| Baker's yeast | 3%. |

The percentages reported above are to be understood as weight per total weight of the ingredients.

From the said ingredients a dough was made by mixing them, in a conventional manner, in a planetary mixer. The dough, after rising, was laid down in a predetermined thickness on the conveyor belt of a baking oven and baked at a temperature of 200°C for 17 minutes, obtaining a continuous layer of baked dough with a total water content equal to 20%.

In addition a cream to act as a barrier was prepared from the following ingredients, in percentage weight on total weight:

| | |
|---|---|
| Sugar | 50% |
| Margarine | 20% |
| Milk | 15% |
| Powdered milk | 13% |
| Starch | 2% |

The cream was prepared by mixing the said ingredients in a conventional manner and had a total water content of 22%.

Onto a layer of the above described oven baked dough, about 14 mm thick, there was deposited a layer, about 2 mm thick, of the barrier cream described above. At this point a 3.5 mm thick layer of the chocolate incorporating water described above was placed onto the cream layer and maintained at a temperature of about 28°C. Onto this layer of chocolate there was then set down a second cream barrier layer of 2 mm thickness, which was then finally covered by a layer of oven baked dough equal to that cited previously.

At this point, conventional cutting operations were carried out to obtain essentially parallelepipedic portions, constituting a snack according to the invention.

The thus obtained snacks were packed individually in sealed polypropylene wrapping and subjected to a test of conservation at room temperature.

After a 2 month period there was no evidence of microbiological alteration nor was there any important variation in the organoleptic characteristics of the product.

## Claims

1. A process for the production of a snack comprising at least a first and a second layer of soft baked dough with an interposed layer of chocolate, that comprises the steps of:
a) making available a first continuous layer of oven baked soft dough and laying down onto said first layer a continuous layer of a cream that acts as a barrier to moisture migration;
b) depositing on said layer of cream a continuous layer of melted chocolate incorporating 2.0 to 10% water;
c) depositing on said layer of chocolate a second continuous layer of said oven baked soft dough;
d) optionally repeating the above steps for further utilized layers of baked soft dough;
e) obtaining individual filled snacks from said superimposed layers by means of cutting operations.

2. A process according to Claim 1, wherein, before depositing said second continuous layer of soft dough, a second layer of cream with a barrier function is deposited on said layer of chocolate.

3. A process according to Claim 1 or 2, wherein said melted chocolate incorporates 2.0 to 3.5% water.

4. A process according to Claim 3, wherein the incorporation of water into the chocolate is done by mixing the chocolate, that has already undergone tempering, with the necessary quantity of water.

5. A process according to Claim 4, wherein said incorporation is done at a temperature of about 25-30°C.

6. A process according to Claim 5, wherein the incorporation is done at a temperature of about 27-28°C.

7. A process according to any one of the preceding Claims, wherein said melted chocolate has been first pasteurised, before being subjected to tempering.

8. A process according to Claim 7, wherein said cream with barrier function towards moisture has been previously pasteurised.

9. A process according to any one of the preceding Claims, wherein said cream with barrier function has a total water content equal to 20-25%.

10. A process according to Claim 9, wherein said cream with barrier function has a lipid content lower than 30%.

## Patentansprüche

1. Verfahren zur Herstellung einer Zwischenmahlzeit (Snack) umfassend mindestens eine erste und eine zweite Schicht aus weichem gebackenen Teig mit einer dazwischen liegenden Schicht aus Schokolade, umfassend die Schritte:
a) Bereitstellen einer ersten durchgehenden Schicht aus ofengebackenem weichen Teig und Aufbringen einer durchgehenden Schicht aus Sahne darauf, die als Feuchtigkeitswanderungsbarriere dient;
b) Aufbringen auf der Sahneschicht einer durchgehenden Schicht aus geschmolzener Schokolade beinhaltend 2,0 bis 10% Wasser, auf die Sahneschicht;
c) Aufbringen einer zweiten durchgehenden Schicht aus ofengebackenem weichem Teig auf die Schicht aus Schokolade;
d) optionales Wiederholen der obigen Schritte für weitere verwendete Schichten aus gebackenem weichen Teig;
e) Bereitstellen einzelner gefüllter Zwischenmahlzeiten aus den übereinanderliegenden Schichten mittels Schneidvorgängen.

2. Verfahren nach Anspruch 1, in dem vor dem Aufbringen der zweiten durchgehenden Schicht aus weichem Teig eine zweite Schicht aus Sahne mit einer Barrierefunktion auf die Schokoladenschicht aufgebracht wird.

3. Verfahren nach Anspruch 1 oder 2, in dem die geschmolzene Schokolade 2,0 bis 3,5% Wasser enthält.

4. Verfahren nach Anspruch 3, in dem das Einbringen von Wasser in die Schokolade durch Mischen der Schokolade, die bereits temperiert wurde, mit der entsprechend notwendigen Menge Wasser durchgeführt wird.

5. Verfahren nach Anspruch 4, in dem das Einbringen bei ei ner Temperatur von ca. 25 bis 30 °C durchgeführt wird.

6. Verfahren nach Anspruch 5, in dem das Einbringen bei einer Temperatur von ca. 27 bis 28 °C durchgeführt wird.

7. Verfahren nach irgendeinem der vorhergehenden Ansprüche, in dem die geschmolzene Schokolade zuerst pasteurisiert wurde, bevor sie einer Temperierung unterworfen wurde.

8. Verfahren nach Anspruch 7, in dem die Sahne mit der Barrierefunktion gegenüber Feuchtigkeit vorher pasteurisiert wurde.

9. Verfahren nach irgendeinem der vorherigen Ansprüche, in dem die Sahne mit der Barrierefunktion einen Gesamtwassergehalt gleich 20 bis 25% aufweist.

10. Verfahren nach Anspruch 9, in dem die Sahne mit Barrierefunktion einen Lipidgehalt niedriger als 30% aufweist.

## Revendications

1. Un procédé de production d'en-cas comprenant au moins une première et une seconde couche d'une pâte molle cuite au four avec une couche de chocolat interposée, qui comprend les étapes suivantes :
a) Mettre à disposition une première couche continue d'une pâte molle cuite au four et disposer sur ladite première couche une couche continue de crème qui agit comme barrière à la migration d'humidité ;
b) déposer sur ladite couche de crème une couche continue de chocolat fondu contenant 2.0 à 10% d'eau ;
c) déposer sur ladite couche de chocolat une seconde couche continue de ladite pâte molle cuite au four ;
d) de manière optionnelle, répéter les étapes ci-dessus pour d'autres couches supplémentaires de pâte molle cuite utilisées;
e) obtenir des en-cas fourrés individuels à partir des couches superposées au moyen d'opérations de découpage

2. Un procédé selon la revendication 1, dans lequel, avant de déposer ladite seconde couche continue de pâte molle, une seconde couche de crème à fonction de barrière est déposée sur ladite couche de chocolat.

3. Un procédé selon la revendication 1 ou 2, dans lequel ledit chocolat fondu contient 2.0 à 3.5% d'eau.

4. Un procédé selon la revendication 3, dans lequel l'introduction d'eau dans le chocolat est réalisée en mixant le chocolat, qui a déjà subi le tempérage, avec la quantité d'eau nécessaire.

5. Un procédé selon la revendication 4, dans lequel ladite introduction est réalisée à une température d'environ 25-30°C.

6. Un procédé selon la revendication 5, dans lequel l'introduction est réalisée à une température d'environ 27-28°C.

7. Un procédé selon l'une quelconques des revendications précédentes, dans lequel ledit chocolat fondu a d'abord été pasteurisé, avant d'être soumis au tempérage.

8. Un procédé selon la revendication 7, dans lequel ladite crème à fonction de barrière contre l'humidité a auparavant été pasteurisée.

9. Un procédé selon l'une quelconque des revendications précédentes, dans lequel ladite crème à fonction de barrière a une teneur totale en eau de 20-25%.

10. Un procédé selon la revendication 9, dans lequel ladite crème à fonction de barrière a une teneur en lipide inférieure à 30%.
